# EUROPÄISCHE PATENTSCHRIFT

(11) **EP 2 787 265 B1**
(45) Veröffentlichungstag und Bekanntmachung des Hinweises auf die Patenterteilung: **07.09.2016**
(21) Anmeldenummer: 14172095.3
(22) Anmeldetag: 03.03.2010
(51) Int. Cl.: F16L 23/14, E04F 17/04, F24F 13/02, F24F 13/08, F16B 5/06, F16B 17/00, F16B 19/00

(54) **Eckwinkelstück**
Corner angle
Pièce de cornière d'angle

(30) Priorität: 05.03.2009 DE 102009011380
(43) Veröffentlichungstag der Anmeldung: 08.10.2014
(62) Teilanmeldung aus: 10710538.9
(73) Patentinhaber: Hermanussen Metallverarbeitung GmbH, 59457 Werl (DE)
(72) Erfinder: Dravenau, Paul, 10119 Berlin (DE); Tenner, Martin, 59457 Werl (DE); Lehmann, Jörg, 59457 Werl (DE)
(74) Vertreter: Isfort, Olaf

(56) Entgegenhaltungen:
- DE-A1-102005 057 934
- DE-B3-102007 012 015
- DE-T2- 68 907 727

## Beschreibung

Die Erfindung betrifft ein Eckwinkelstück zum Verbinden von zwei an einem im Querschnitt rechteckig ausgebildeten Teilabschnitt eines Luftkanals senkrecht zueinander angeordneten Flanschprofilen einer Flanschprofilverbindung zwischen zwei Teilabschnitten eines Luftkanals, wobei das Eckwinkelstück bei seiner bestimmungsgemäßen Anordnung an den Flanschprofilen L-förmig ausgebildet ist und zwei separate, senkrecht zueinander angeordnete Schenkel aufweist, die jeweils einendseitig einen Anlageabschnitt aufweisen, mit denen die Schenkel aneinander anliegen.

Eine herkömmliche Flanschprofilverbindung ist beispielsweise aus DE 20 2007 007 165 U1 bekannt. Zum Verbinden von Teilabschnitten eines Luftkanals werden die Flanschprofile stirnseitig an den Luftkanalteilabschnitten angeordnet. Der im Querschnitt rechteckig ausgebildete Luftkanal wird an jedem stirnseitigen Ende umlaufend mit Flanschprofilen versehen. Zwei derartig präparierte Luftkanalteilabschnitte werden auf Stoß zusammengefügt und anschließend beispielsweise durch Anordnung von Klammern, Verschraubungen oder ähnlichem an den Flanschprofilen aneinander fixiert. Zwei senkrecht zueinander angeordnete Flanschprofile sind über ein L-förmig ausgebildetes und zwei senkrecht zueinander angeordnete Schenkel aufweisendes Eckwinkelstück miteinander verbunden. Die Eckwinkelstücke sind bei DE 20 2007 007 165 U1 einstückig ausgebildet und weisen somit keine separaten Schenkel auf. Bei Verwendung solcher einstückig ausgebildeter Eckwinkel ist es erforderlich, dass die Schenkel der Eckwinkel bereits vor dem Befestigen der Flanschprofile an einem Luftkanalteilabschnitt in die Flanschprofile eingeführt werden. Dieses erschwert deutlich die Anordnung einer entsprechenden Flanschprofilverbindung und erfordert es, dass mehrere Personen zur Montage der Flanschprofile zusammenarbeiten müssen.

Um die Montage einer Flanschprofilverbindung zu vereinfachen, schlägt DE 689 07 727 T2 ein zweiteiliges Eckwinkelstück mit zwei separaten, senkrecht zueinander angeordneten Schenkeln vor, die jeweils einendseitig einen Anlageabschnitt aufweist, mit denen die Schenkel aneinander anliegen. Dies ermöglicht die Anordnung des Eckwinkels an den Flanschprofilen, nachdem diese an einem Luftkanalteilabschnitt befestigt worden sind. Diese nachträgliche Anordnung der Eckwinkel umfasst das Einbringen von einem der separaten Schenkel bis zu einer bestimmten Tiefe in ein erstes Flanschprofil und daraufhin das Einbringen des anderen der beiden separaten Schenkel in ein zum ersten Flanschprofil senkrecht ausgerichtetes zweites Flanschprofil bis zu einer bestimmten Tiefe. Das Einbringen kann beispielsweise durch Einschlagen der Schenkel mittels eines Hammers erfolgen. Die relative Fixierung der beiden Schenkel zueinander in ihrer bestimmungsgemäßen Endposition erfolgt über Endflansche und diesen gegenüberliegend angeordnete Ansätze an den Anlageabschnitten.

Aus der DE 10 2005 057 934 A1 ist ein System für Klimatisierungskanäle mit Eckwinkeln bekannt. Die Eckwinkel umfassen ein erstes und ein zweites Winkelteil, wobei das erste Winkelteil eine Führung aufweist und die Führung das zweite Winkelteil an den Schmalseiten und an beiden Breitseiten hält. Um ein Einrasten der zwei Winkelteile miteinander zu ermöglichen, weisen diese Nocken und damit korrespondierende Löcher auf. Das aus der DE 10 2005 057 934 A1 bekannte Eckwinkelstück ist somit gemäß dem Oberbegriff des Anspruchs 1 ausgebildet.

Nachteilig bei einer solchen Ausgestaltung ist, dass keine ausreichende Sicherung der relativen Position der beiden Schenkel untereinander gewährleistet ist. Da entsprechend ausgebildete Flanschprofilverbindungen jedoch die auf den Luftkanal einwirkenden Kräfte aufnehmen müssen, sind an sie hohe Stabilitätsanforderungen zu stellen.

Dementsprechend schlägt die Erfindung vor, dass die Anlageabschnitte der Schenkel jeweils mit einer Verzahnung versehen sind, wobei die Verzahnung des einen Schenkels in die des anderen Schenkels eingreift.

Gemäß der Erfindung wird somit ein zweiteiliges Eckwinkelstück mit zwei separaten Schenkeln vorgeschlagen, deren Anlageabschnitte bei bestimmungsgemäßer Anordnung der Vorrichtung an den Flanschprofilen derart aneinander anliegen und gegeneinander gepresst werden, dass die Verzahnungen der Anlageabschnitte zur Sicherung der Relativstellung der beiden separaten Schenkel zueinander ineinander eingreifen. Hierdurch wird die Relativposition der beiden Schenkel zueinander deutlich besser gesichert, als es bei den aus dem Stand der Technik bekannten Eckwinkeln der Fall ist. Dieses wird erreicht, ohne dass die Handhabung der Vorrichtung erschwert ist oder zusätzliche Arbeitsschritte erforderlich sind. Die beiden Schenkel können stattdessen auf herkömmliche Art und Weise in die jeweiligen Flanschprofile eingebracht werden und nehmen in ihrer Endposition ihre zueinander senkrechte Anordnung ein, welche durch die Anordnung der Verzahnungen an den Anlageabschnitten gegen Relativbewegungen der Schenkel zueinander gesichert ist.

Eine vorteilhafte Ausgestaltung der Erfindung sieht vor, dass wenigstens ein Schenkel an dem Ende, an dem der Anlageabschnitt angeordnet ist, eine in Richtung der Verzahnung und quer zur Längserstreckung des Schenkels ausgerichtete Abwinkelung aufweist. Es können auch beide Schenkel mit einer entsprechenden Abwinkelung versehen sein. Diese Abwinkelungen dienen unter anderem der Begrenzung der Bewegbarkeit der Schenkel zueinander beim Einbringen derselben in die Flanschprofile. Diese Ausgestaltung der Vorrichtung dient zudem der weiteren Verbesserung der Sicherung der Relativposition der Schenkel zueinander.

Nach einer weiteren vorteilhaften Ausgestaltung der Erfindung ist wenigstens ein Schenkel mit Ausnahme seines Anlageabschnitts im Querschnitt im Wesentlichen U-förmig ausgebildet. Hierdurch wird die Formsteifigkeit eines solchen Schenkels deutlich erhöht, um den gegebenen Stabilitätsanforderungen zu genügen. Auch hier ist möglich, dass beide Schenkel derartig ausgebildet sind.

Ferner wird vorgeschlagen, dass wenigstens einer der Schenkel einen Anschlag aufweist. Dieser Anschlag ist vorzugsweise so an dem Schenkel angeordnet, dass er die maximale Einbringtiefe des Schenkels in ein Flanschprofil derart begrenzt, dass der Anlageabschnitt bei Erreichen der Endstellung eines Schenkels vollständig außerhalb des Flanschprofils verbleibt. Es können auch beide Schenkel mit einem solchen Anschlag versehen sein.

Die Schenkel des erfindungsgemäßen Eckwinkelstücks bestehen bevorzugt aus Kunststoff.

Weitere Vorteile und Merkmale der vorliegenden Erfindung werden im Folgenden anhand der in den Figuren gezeigten Ausführungsbeispiele näher erläutert. Dabei zeigen:
- Figur 1:: eine perspektivische Darstellung eines Ausführungsbeispiels eines erfindungsgemäßen Eckwinkelstücks in nichtmontierter Stellung, und
- Figur 2:: eine perspektivische Darstellung eines weiteren Ausführungsbeispiels des erfindungsgemäßen Eckwinkelstücks in seiner Montagestellung.

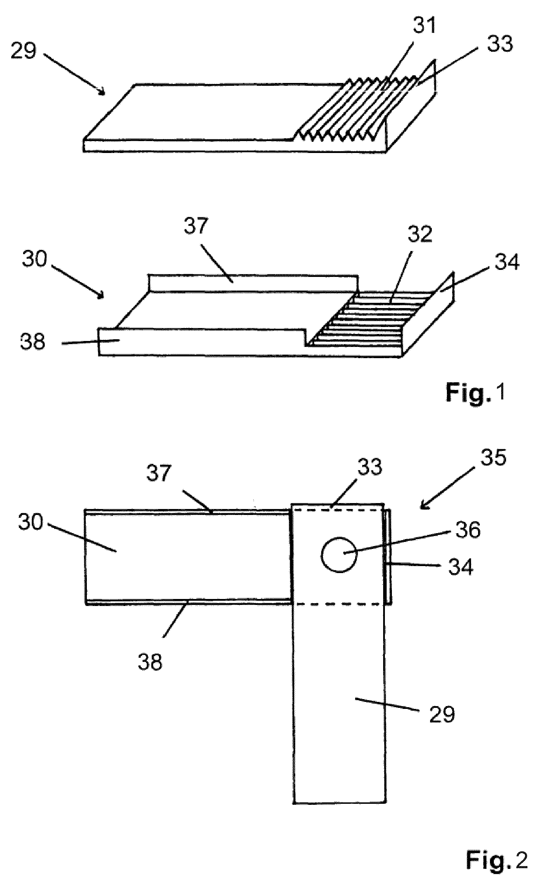

Figur 1 ist eine perspektivische und schematische Darstellung einer beispielhaften Ausführungsform der beiden Schenkel 29 und 30 eines erfindungsgemäßen Eckwinkelstücks 35. Die Schenkel 29 und 30 weisen jeweils einendseitig einen Anlageabschnitt 31 beziehungsweise 32 auf. Mit diesen Anlageabschnitten 31 und 32 liegen die Schenkel 29 und 30 bei bestimmungsgemäßer Anordnung des Eckwinkelstücks 35 an einer Flanschprofilverbindung aneinander an, wie es in Figur 2 gezeigt ist. Die Anlageabschnitte 31 und 32 sind jeweils mit einer Verzahnung versehen. Bei bestimmungsgemäßer Anordnung des Eckwinkelstücks 35 an einer Flanschprofilverbindung, wie sie in Figur 2 gezeigt ist, greift die Verzahnung von Schenkel 29 in die von Schenkel 30 ein. Hierdurch erfolgt die erfindungsgemäße Sicherung der Relativposition der Schenkel 29 und 30 zueinander. Die Schenkel 29 und 30 weisen jeweils an dem Ende, an dem der Anlageabschnitt 31 beziehungsweise 32 angeordnet ist, eine in Richtung der Verzahnung und quer zur Längserstreckung des Schenkels 29 beziehungsweise 30 ausgerichtete Abwinkelung 33 beziehungsweise 34 auf. Die Funktion der Abwinkelungen 33 und 34 wird genauer aus Figur 8 deutlich. Schenkel 30 ist mit Ausnahme seines Anlageabschnitts 32 im Querschnitt im Wesentlichen U-förmig ausgebildet. Dies erhöht die Formsteifigkeit von Schenkel 30, um den gegebenen Stabilitätsanforderungen zu genügen.

Figur 2 zeigt schematisch ein Ausführungsbeispiel des erfindungsgemäßen Eckwinkelstücks 35 in seiner bestimmungsgemäßen Anordnung an den Flanschprofilen (nicht dargestellt). Es ist L-förmig ausgebildet und weist die zwei separaten, senkrecht zueinander angeordneten Schenkel 29 und 30 auf, welche im Wesentlichen wie in Figur 1 gezeigt ausgebildet sind. Die Anlageabschnitte 31 und 32 der Schenkel 29 und 30 liegen aneinander. Ihre Verzahnungen greifen zur Sicherung der Relativposition der Schenkel 29 und 30 zueinander ineinander. Die Schenkel 29 und 30 beziehungsweise deren Anlageabschnitte 31 und 32 weisen in dieser Ausführungsform jeweils eine Öffnung 36 auf, über die eine Verschraubung der Schenkel 29 und 30 miteinander erfolgen kann, um die Relativposition der beiden Schenkel 29 und 30 zueinander weiter zu sichern. Durch ein solches Verschrauben der beiden Schenkel 29 und 30 werden die Verzahnungen derart ineinander gepresst, dass das Eckwinkelstück 35 die gleichen Stabilitätseigenschaften wie ein herkömmlicher einstückig ausgebildeter Eckwinkel aufweist. Die Abwinkelungen 33 und 34 dienen ebenfalls der Sicherung der relativen Stellung der Schenkel 29 und 30 zueinander.

Im Folgenden wird die Montage des erfindungsgemäßen Eckwinkelstücks 35 an einer nicht dargestellten Flanschprofilverbindung erläutert. Dabei wird zunächst der Schenkel 30 in ein bereits an einem Luftkanalteilabschnitt angeordnetes Flanschprofil eingebracht. Dieses kann beispielsweise durch Schlagen mit einem Hammer auf die Abwinkelung 34 erfolgen. Damit der Schenkel 30 nicht vollständig in das Flanschprofil eingebracht wird, weist er einen nicht dargestellten Anschlag auf, damit in seiner Endstellung der Anlageabschnitt 32 mit seiner Verzahnung vollständig außerhalb des Flanschprofils angeordnet ist. Nach Erreichen der bestimmungsgemäßen Endstellung des ersten Schenkels 29 wird nun der zweite Schenkel 30 in ein ebenfalls bereits an dem Luftkanalteilabschnitt senkrecht zu dem vorgenannten Flanschprofil angeordnetes Flanschprofil eingebracht. Dieses kann beispielsweise ebenso durch Schlagen mit einem Hammer auf die Abwinkelung 33 erfolgen. Bei diesem Einbringen des Schenkels 29 wird er zwischen der Abwinkelung 34 und den Längsschenkeln 37 und 38 des Schenkels 2 geführt. Die maximale Einbringtiefe des Schenkels 29 in das entsprechende Flanschprofil wird durch die Abwinkelung 33 begrenzt, welche, wie in Figur 2 gezeigt, an einer Seite entlang der Längserstreckung des Schenkels 30 bei Erreichen der bestimmungsgemäßen Endstellung von Schenkel 29 anliegt. Sind beide Schenkel 29 und 30 in ihre Endstellungen überführt, befindet sich das Eckwinkelstück 35 in seiner bestimmungsgemäßen Ausgestaltung zum Verbinden der Flanschprofile, in der die Verzahnungen ineinander greifen.

## Patentansprüche

1. Eckwinkelstück zum Verbinden von zwei an einem Teilabschnitt eines im Querschnitt rechteckig ausgebildeten Luftkanals senkrecht zueinander angeordneten Flanschprofilen, wobei das Eckwinkelstück (35) bei seiner bestimmungsgemäßen Anordnung an den Flanschprofilen L-förmig ausgebildet ist und zwei separate, senkrecht zueinander angeordnete Schenkel (29, 30) aufweist, die jeweils einendseitig einen Anlageabschnitt (31, 32) aufweisen, mit denen die Schenkel (29, 30) aneinander anliegen,
**dadurch gekennzeichnet, dass** die Anlageabschnitte (31, 32) jeweils mit einer Verzahnung versehen sind, wobei die Verzahnung des einen Schenkels (29, 30) in die des anderen Schenkels (29, 30) eingreift.

2. Eckwinkelstück nach Anspruch 1, **dadurch gekennzeichnet, dass** wenigstens ein Schenkel (29, 30) an dem Ende, an dem der Anlageabschnitt (31, 32) angeordnet ist, eine in Richtung der Verzahnung und quer zur Längserstreckung des Schenkels (29, 30) ausgerichtete Abwinkelung (33, 34) aufweist.

3. Eckwinkelstück nach Anspruch 1 oder 2, **dadurch gekennzeichnet, dass** wenigstens ein Schenkel (29, 30) mit Ausnahme seines Anlageabschnitts (31, 32) im Querschnitt im Wesentlichen U-förmig ausgebildet ist.

4. Eckwinkelstück nach einem der vorhergehenden Ansprüche, **dadurch gekennzeichnet, dass** wenigstens ein Schenkel (29, 30) einen Anschlag aufweist.

## Claims

1. Corner angle piece for connecting two flange profiles arranged perpendicularly to one another on a subsection of an air duct of rectangular cross section, wherein the corner angle piece (35) is L-shaped when arranged as intended on the flange profiles and has two separate legs (29, 30) which are arranged perpendicularly to one another and which each have at one end a bearing portion (31, 32) by means of which the legs (29, 30) bear against one another, **characterized in that**
the bearing portions (31, 32) are each provided with a toothing, wherein the toothing of one leg (29, 30) engages **in that** of the other leg (29, 30).

2. Corner angle piece according to Claim 1, **characterized in that** at least one leg (29, 30) has, at the end on which the bearing portion (31, 32) is arranged, an angled portion (33, 34) oriented in the direction of the toothing and transversely to the longitudinal extent of the leg (29, 30).

3. Corner angle piece according to Claim 1 or 2, **characterized in that** at least one leg (29, 30), with the exception of its bearing portion (31, 32), is substantially U-shaped in cross section.

4. Corner angle piece according to one of the preceding claims, **characterized in that** at least one leg (29, 30) has a stop.

## Revendications

1. Pièce de cornière d'angle pour la connexion de deux profilés de brides disposés perpendiculairement l'un à l'autre au niveau d'une portion partielle d'un conduit d'air réalisé avec une section transversale rectangulaire, la pièce de cornière d'angle (35) étant réalisée en forme de L lors de son agencement conforme au niveau des profilés de brides et présentant deux branches séparées (29, 30) disposées perpendiculairement l'une à l'autre, qui présentent chacune du côté d'une extrémité une portion d'appui (31, 32), avec lesquelles les branches (29, 30) s'appliquent l'une contre l'autre,
**caractérisée en ce que**
les portions d'appui (31, 32) sont chacune pourvues d'une denture, la denture d'une branche (29, 30) s'engageant dans la denture de l'autre branche (29, 30).

2. Pièce de cornière d'angle selon la revendication 1, **caractérisée en ce qu'**au moins une branche (29, 30), au niveau de l'extrémité à laquelle est disposée la portion d'appui (31, 32), présente un coude (33, 34) orienté dans la direction de la denture et transversalement à l'étendue longitudinale de la branche (29, 30).

3. Pièce de cornière d'angle selon la revendication 1 ou 2, **caractérisée en ce qu'**au moins une branche (29, 30), à l'exception de sa portion d'appui (31, 32), est réalisée avec une section transversale essentiellement en forme de U.

4. Pièce de cornière d'angle selon l'une quelconque des revendications précédentes, **caractérisée en ce qu'**au moins une branche (29, 30) présente une butée.
